# EUROPÄISCHE PATENTANMELDUNG

(11) **EP 0 791 493 A2**
(43) Veröffentlichungstag der Anmeldung: **27.08.1997**
(21) Anmeldenummer: 97102545.7
(22) Anmeldetag: 18.02.1997
(51) Int. Cl.: B60H 1/22

(54) **Heizeinrichtung**

(30) Priorität: 26.02.1996 DE 19607122
(71) Anmelder: SÜTRAK TRANSPORTKÄLTE GESELLSCHAFT MIT BESCHRÄNKTER HAFTUNG, 71272 Renningen (DE)
(72) Erfinder: Hille, Andreas, 71272 Renningen (DE)
(74) Vertreter: Hoeger, Stellrecht & Partner

(57) **Zusammenfassung**

Um eine Heizeinrichtung für Personenkraftfahrzeuge, umfassend ein äußeres Gehäuse (10) und ein in diesem angeordnetes elektrisches Heizelement (72) derart zu verbessern, daß dieses einerseits möglichst raumsparend und andererseits möglichst sicher für die Benutzer der Personentransportfahrzeuge ausgebildet wird, wird vorgeschlagen, daß das elektrische Heizelement (72) isoliert an einem Träger (40) gehalten ist und daß dieser Träger (40) elektrisch isoliert gegenüber dem äußeren Gehäuse (10) angeordnet ist.

## Beschreibung

Die Erfindung betrifft eine Heizeinrichtung für Personentransportfahrzeuge, umfassend ein äußeres Gehäuse und ein in diesem angeordnetes elektrisches Heizelement.

Derartige Heizeinrichtungen sind aus dem Stand der Technik bekannt. Es besteht jedoch bei dieser Art von Heizeinrichtungen stets die Forderung, diese einerseits möglichst raumsparend und andererseits möglichst sicher für die Benutzer der Personentransportfahrzeuge auszubilden.

Diese Aufgabe wird bei einer Heizeinrichtung der eingangs beschriebenen Art erfindungsgemäß dadurch gelöst, daß das elektrische Heizelement elektrisch isoliert an einem Träger gehalten ist und daß dieser Träger elektrisch isoliert gegenüber dem äußeren Gehäuse angeordnet ist.

Mit dieser Lösung ist eine zweifache Sicherung für den Fall geschaffen, daß die elektrische Isolation des Heizelements Schaden nimmt und daher der Träger auf eine elektrische Spannung gegenüber Masse gelegt werden könnte. Im Falle der erfindungsgemäßen Lösung ist dies ohne Auswirkungen auf das Potential des äußeren Gehäuses, so daß ein erhöhter Schutz für die Personen des Personentransportfahrzeugs gewährleistet wird.

Darüber hinaus bietet diese Lösung die Möglichkeit, über die Erfassung des elektrischen Potentials des Trägers Beschädigungen der Isolation der Heizelemente gegenüber dem Träger sofort und gefahrlos für die Personen der Personentransportfahrzeuge erkennen zu können.

Damit erlaubt die erfindungsgemäße Lösung insbesondere die Verwendung von Hochspannung, beispielsweise im Bereich von 600 V, für das Betreiben des elektrischen Heizelements.

Die elektrische Isolation des Trägers gegenüber dem äußeren Gehäuse läßt sich in besonders einfacher Art und Weise dadurch realisieren, daß der Träger an dem äußeren Gehäuse mittels Isolatoren gehalten ist, wobei, insbesondere um einen ausreichenden Isolationszwischenraum zu erreichen, eine besonders zweckmäßige Lösung vorsieht, daß der Träger mittels der Isolatoren zwischen den Seitenwänden des äußeren Gehäuses gehalten ist.

Der Träger könnte prinzipiell ein separates Element sein, welches das Heizelement nochmals gegenüber dem äußeren Gehäuse isoliert. Eine besonders kompakte Bauweise der erfindungsgemäßen Heizeinrichtung, insbesondere bei Verwendung einer Gebläseeinheit sieht dabei vor, daß der Träger für das Heizelement ein Diffusor für mittels einer Gebläseeinheit umgewälzter Luft ist. Diese Lösung hat den großen Vorteil, daß bei Ausbildung des Trägers für die Heizelemente als Diffusor gleichzeitig eine besonders günstige Verteilung für einen von der Gebläseeinheit erzeugten Gebläseluftstrom geschaffen ist, so daß der Träger für das Heizelement gleichzeitig noch im Sinne einer vorteilhaften Luftverteilung wirkt. Ferner wird durch diese Bauweise gleichzeitig ein kompakter Aufbau der erfindungsgemäßen Heizeinrichtung ermöglicht, da damit die Einhaltung von aus Gründen der elektrischen Isolation erforderlichen Abständen zwischen Träger und Diffusor nicht erforderlich ist.

Besonders vorteilhaft ist diese Lösung auch dann, wenn das Heizelement innerhalb des Diffusors angeordnet ist, so daß der Diffusor gleichzeitig noch das Heizelement teilweise umschließt und somit auch eine zusätzliche mechanische Kapselung des Heizelements darstellt.

Eine besonders vorteilhafte Lösung sieht vor, daß die Gebläseeinheit relativ zu dem Diffusor elektrisch isoliert angeordnet ist, denn damit ist die Möglichkeit geschaffen, die Gebläseeinheit auf anderem Spannungsniveau zu betreiben als das elektrische Heizelement. Beispielsweise wäre es dann in diesem Fall möglich, die Gebläseeinheit mit Niederspannung, beispielsweise 24 V, zu betreiben, ein elektrisches Potential für welches wesentlich geringere Sicherheitsvorschriften einzuhalten sind.

Im Zusammenhang mit der bisherigen Erläuterung der erfindungsgemäßen Lösung wurde lediglich auf die kompakte und sichere Bauweise in Verbindung mit der elektrischen Isolation des Trägers eingegangen. Die erfindungsgemäße Lösung löst jedoch die eingangs genannte Aufgabe alternativ oder ergänzend durch ihre besonderen geometrischen Merkmale.

So sieht eine besonders vorteilhafte Lösung vor, daß der Diffusor sich von einem vorderen Endbereich des Gehäuse der Heizeinrichtung in Richtung einer Rückseite des Gehäuses erstreckt und daß zwischen der Rückseite des Gehäuses und dem Diffusor die Gebläseeinheit angeordnet ist. Diese Art der Anordnung erlaubt einen besonders kompakten Aufbau, insbesondere eine äußerst niedrige Bauhöhe der gesamten Einheit.

Besonders vorteilhaft ist es dabei, wenn der Diffusor einen Gebläseluftstrom in Richtung des vorderen Endbereichs über dem Heizelement verteilt. Damit kann der Diffusor vorteilhafterweise dazu eingesetzt werden, trotz der aufeinander folgenden Anordnung von Diffusor und Gebläseeinheit, den Gebläseluftstrom im wesentlichen bis zum vorderen Endbereich über dem Heizelement zu verteilen.

Besonders zweckmäßig ist es bei der erfindungsgemäßen Lösung, wenn sich das Heizelement im wesentlichen von dem vorderen Endbereich bis nahe zur Gebläseeinheit erstreckt, so daß in vorteilhafter Weise die Möglichkeit besteht, das Heizelement trotz geringer Bauhöhe der Heizeinrichtung großflächig auszubilden.

In diesem Fall kann zusätzlich der Diffusor noch dazu eingesetzt werden, den Gebläseluftstrom quer zur Erstreckung des Heizelements zwischen dem vorderen Endbereich und Gebläseeinheit umzulenken und somit den Gebläseluftstrom quer zur Erstreckung des Heizelements in dieser Richtung an dem Heizelement vorbeiströmen zu lassen.

Insbesondere bei einer Lösung, bei welcher das Heizelement innerhalb des Diffusors angeordnet ist, ist vorteilhafterweise vorgesehen, daß der Diffusor einen einem Luftauslaß des äußeren Gehäuses zugewandten und im wesentlichen gegenüberliegenden Luftauslaß aufweist. Damit ist in besonders einfacher Weise ein vorteilhafter Austritt der Luft aus dem Gehäuse sichergestellt, ohne daß eine zusätzliche Umlenkung der erwärmten Luft erforderlich ist.

Eine besonders zweckmäßige Ausbildung der erfindungsgemäßen Lösung sieht dabei vor, daß der durch das Heizelement aufgeheizte Gebläseluftstrom aus einer Unterseite des Gehäuses austritt. In diesem Fall ist vorzugsweise vorgesehen, daß das Heizelement der Unterseite des Gehäuses zugewandt angeordnet ist und insbesondere, daß der Diffusor dem Heizelement den Gebläseluftstrom zwischen dem Heizelement und der Oberseite des Gehäuses zuführt.

Im Zusammenhang mit der bisherigen Ausbildung der erfindungsgemäßen Lösung wurde das Heizelement selbst nicht näher spezifiziert. So sieht ein besonders vorteilhaftes Ausführungsbeispiel vor, daß sich das Heizelement in einer Fläche erstreckt, welche in einem spitzen Winkel zu einer oberen Gehäusewand verläuft.

Vorzugsweise ist ein derartiges flaches Heizelement aus im wesentlichen parallel zueinander verlaufenden Heizstäben ausgebildet, welche in der Fläche liegen, wobei die Fläche vorzugsweise eine geringfügige von einer Ebene abweichende Wölbung aufweist.

Hinsichtlich ihrer Sicherheit besonders vorteilhafte Lösungen der erfindungsgemäßen Heizeinrichtung sehen vor, daß diese eine Überwachungsschaltung für eine Stromaufnahme der Gebläseeinheit aufweist, welche bei Überlastung oder Ausfall der Gebläseeinheit eine Stromzufuhr zum Heizelement abschaltet.

Alternativ oder ergänzend hierzu sieht eine andere Lösung vor, daß die Heizeinrichtung eine Überwachungsschaltung für die Lufttemperatur im Diffusor aufweist, welche bei Überschreiten einer vorgegebenen Grenztemperatur die Stromzufuhr zum Heizelement unterbricht. Auch diese Lösung hat den großen Vorteil, daß jegliche Art von Überhitzung der Luft im Diffusor aus Sicherheitsgründen zu einem Abschalten des Heizelements führt.

Schließlich sieht alternativ oder ergänzend zu der vorstehend beschriebenen Sicherheitseinrichtung ein weiteres Ausführungsbeispiel vor, daß die Heizeinrichtung eine Überwachungsschaltung für die austretende aufgeheizte Luft aufweist, welche bei Überschreiten einer Grenztemperatur die Stromzufuhr zum Heizelement unterbricht.

Im Rahmen der erfindungsgemäßen Lösung wurde im wesentlichen auf Merkmale der Heizeinrichtung abgestellt, nicht jedoch auf den Einbau derselben in dem Personentransportfahrzeug. Die erfindungsgemäße Aufgabe wird aber auch durch einen Personentransportfahrzeug mit einer Heizeinrichtung dadurch gelöst, daß die Heizeinrichtung, insbesondere gemäß den vorstehend beschriebenen Ausführungsbeispielen, unterhalb eines Sitzflächenträgers eines Sitzgestells eines Personensitzes des Personentransportfahrzeugs und frei über einem Fahrzeugboden angeordnet ist. Damit ist ein bestmöglicher Abstand zwischen den Beinen einer auf dem Personensitz sitzenden Person und der Heizeinrichtung erreichbar, so daß insbesondere eine direkte Berührung des Gehäuses weitgehend vermieden werden kann.

Besonders zweckmäßig ist es dabei, wenn die Heizeinrichtung sich zwischen einer Rückseite des Personensitzes und einer Sitzvorderseite erstreckt.

Eine besonders zweckmäßige Lösung sieht dabei vor, daß die Heizeinrichtung zwischen einem im wesentlichen horizontal verlaufenden Sitzflächentrageelement und einem von einer Sitzvorderseite schräg in Richtung einer Sitzrückseite und in Richtung eines Fahrzeugbodens verlaufenden Sitzflächenträgers angeordnet ist. Eine derartige Anordnung hat den Vorteil, daß die erfindungsgemäße Heizeinrichtung zwar unterhalb des Personensitzes, jedoch in möglichst großem Abstand von den Beinen einer auf dem Personensitz sitzenden Person angeordnet werden kann.

In diesem Fall hat es sich als besonders vorteilhaft erwiesen, wenn das Gehäuse der Heizeinrichtung einen im wesentlichen in Richtung des Fahrzeugbodens gerichteten Luftauslaß aufweist.

Weitere Merkmale und Vorteile der erfindungsgemäßen Lösung sind Gegenstand der nachfolgenden Beschreibung sowie der zeichnerischen Darstellung eines Ausführungsbeispiels. In der Zeichnung zeigen:
- Fig. 1: Einen Längsschnitt durch eine erfindungsgemäße Heizeinrichtung, angebaut an einen Sitz eines Personentransportfahrzeuges längs Linie 1-1 in Fig. 2;
- Fig. 2: einen Schnitt längs Linie 2-2 in Fig. 1;
- Fig. 3: einen Schnitt längs Linie 3-3 in Fig. 2.

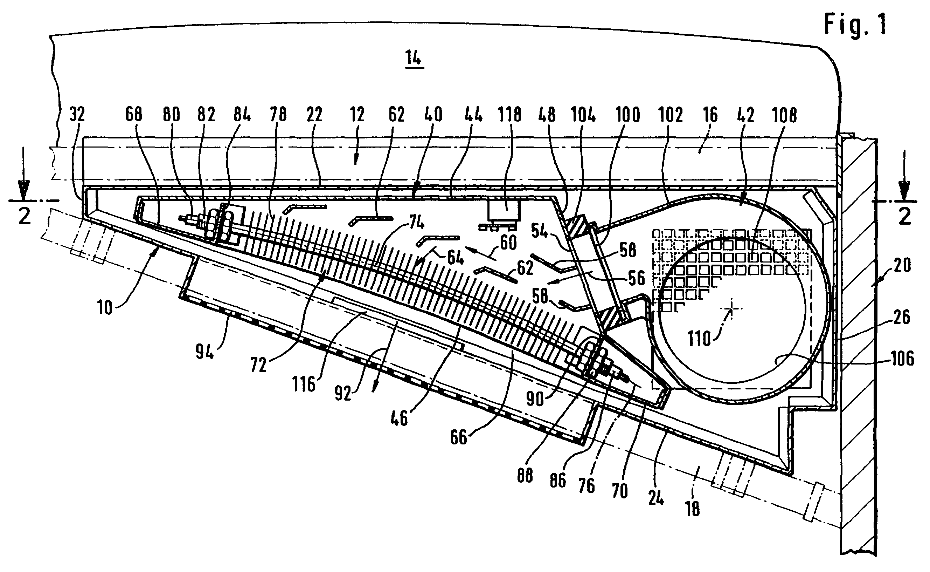

Ein Ausführungsbeispiel einer erfindungsgemäßen Heizeinrichtung für Personenfahrzeuge, dargestellt in den Fig. 1 bis 3, umfaßt, wie in Figur 1 dargestellt, ein als Ganzes mit 10 bezeichnetes äußeres Gehäuse, welches an einem Sitzgestell 12 unterhalb einem mit 14 bezeichneten Sitzpolster angeordnet ist.

Das Sitzgestell 12 umfaßt, wie in Fig. 1 bis 3 dargestellt, eine im wesentlichen horizontal verlaufende obere Strebe 16 sowie zwei die obere Strebe 16 stützende und von einem vorderen Ende derselben im spitzen Winkel zur oberen Strebe 16 sich schräg, nach unten, in Richtung eines Fahrzeugbodens des Personentransportfahrzeuges erstreckende untere Streben 18, welche beide mit einem rückwärtigen, im wesentlichen vertikal verlaufenden Ständer 20 verbunden sind.

Das äußere Gehäuse 10 liegt zwischen der oberen Strebe 16, den unteren Streben 18 und dem rückwärtigen Ständer 20 und umfaßt eine obere Gehäusewand 22, welche sich ungefähr parallel zur oberen Strebe 16 erstreckt, eine untere Gehäusewand 24, mit welcher das äußere Gehäuse 10 auf den unteren Streben 18 aufliegt, und eine Rückwand 26, welche sich ungefähr parallel zum Ständer 20 erstreckt. Ferner ist das äußere Gehäuse 10 durch zwei Seitenwände 28 und 30 verschlossen.

Innerhalb des äußeren Gehäuses 10 ist ein als ganzes mit 40 bezeichneter Diffusor angeordnet, welcher sich von einem der Rückwand 26 abgewandten vorderen Endbereich 32 des äußeren Gehäuses 10 ausgehend bis zu einer als Ganzes mit 42 bezeichneten Gebläseeinheit erstreckt, die zwischen dem Diffusor 40 und der Rückwand 26 liegt. Der Diffusor 40 umfaßt seinerseits eine obere Diffusorwand 44, welche ungefähr parallel zur oberen Gehäusewand 22 verläuft, eine untere Diffusorwand 46, welche mit ihrem vorderen, im vorderen Endbereich 32 liegenden Ende mit der oberen Diffusorwand 44 verbunden ist und ungefähr parallel der unteren Gehäusewand 24 verläuft, ist zur Gebläseeinheit 42 hin durch eine Diffusorrückwand 48 abgeschlossen. Ferner ist der Diffusor 40 durch zwei Seitenwände 50 und 52 verschlossen.

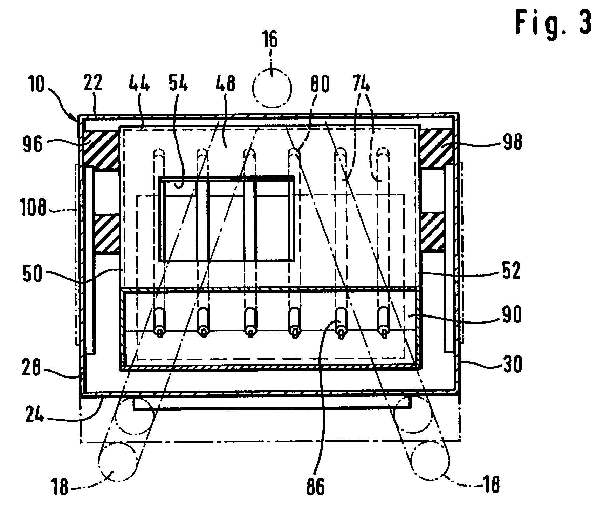

Die Diffusorrückwand 48 ist, wie in Fig. 3 dargestellt, mit einer Lufteinlaßöffnung 54 versehen, durch welche ein von der Gebläseeinheit 42 erzeugter Gebläseluftstrom 56 eintritt.

Dieser Gebläseluftstrom 56 wird durch erste Diffusorleitbleche, welche sich zwischen den Diffusorseitenwänden 50 und 52 und nahe der Lufteinlaßöffnung 54 erstrecken, zu wesentlichen Teilen in einer parallel zur unteren Diffusorwand 46 verlaufenden Richtung 60 umgelenkt und verteilt und durch zweite Diffusorbleche 62 in eine Austrittsrichtung 64 umgelenkt, welche quer zur unteren Diffusorwand 46 verläuft. Zum Auslaß des in Austrittsrichtung 64 strömenden Gebläseluftstroms ist die untere Diffusorwand 46 mit einer Luftaustrittsöffnung 66 versehen, welche sich über mehr als die Hälfte der Erstreckung der unteren Diffusorwand 46 zwischen deren vorderem Endbereich 68 und derem hinteren Endbereich 70 ausdehnt und sich ebenfalls im wesentlichen über die Breite der unteren Diffusorwand 46 zwischen den Diffusorseitenwänden 50, 52 erstreckt.

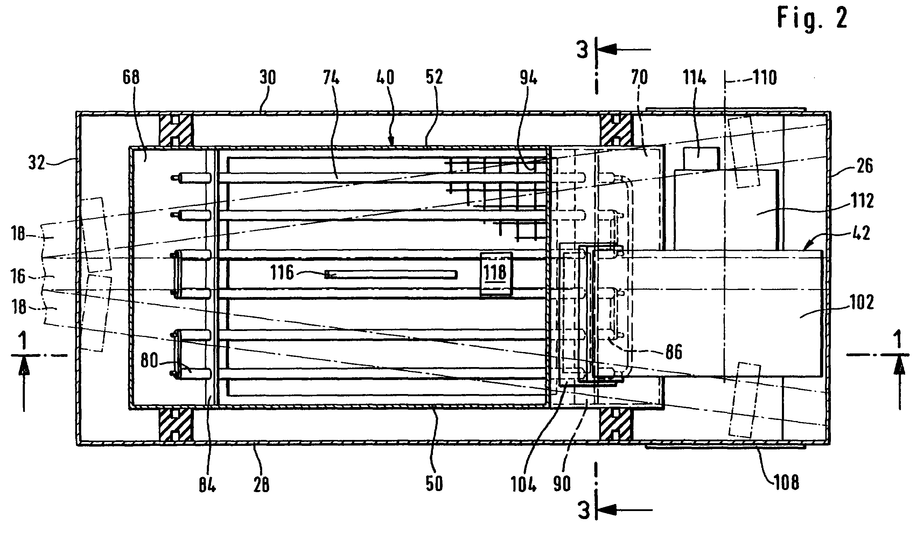

Vor der Luftaustrittsöffnung 66 liegt ein als ganzes mit 72 bezeichnetes Heizelement, welches, wie in Fig. 2 und 3 dargestellt, mehrere sich parallel zueinander erstreckende Heizstäbe 74 aufweist, die in einer geringfügig gekrümmten Fläche 76 liegen und mit entweder ungefähr parallel oder geringfügig schräg zur Austrittsrichtung 64 verlaufenden Heizrippen 78 versehen sind, die sich im wesentlichen quer zu den Heizstäben 74 und somit auch quer zur Fläche 76 erstrecken.

Die Heizstäbe 74 sind alle ihrerseits an einem vorderen Ende 80 mittels Isolatoren 82 an einem Haltesteg 84 gehalten und mit ihrem hinteren Ende 86 ebenfalls mittels Isolatoren 88 an einem Haltesteg 90, wobei die Haltestege 84 und 90 am Diffusor 40 angeordnet sind, so daß sich das gesamte Heizelement 72 im Diffusor 40 und im wesentlichen unmittelbar vor dessen Luftaustrittsöffnung 66 sowie im wesentlichen über die gesamte Ausdehnung derselben hinweg erstreckt. Aus diesem Grund sind auch die zweiten Diffusorbleche 62 nahe des Heizelements 72 angeordnet und zwar so, daß sie den Gebläseluftstrom im wesentlichen gleichmäßig über die gesamte Ausdehnung des Heizelements 72 verteilen und damit zusammen mit den Heizrippen 78 bewirken, daß aus der Luftaustrittsöffnung 66 ein Luftstrom 92 mit einer im wesentlichen zur Fläche 76 parallelen Strömungsfront austritt. Dieser Luftstrom 92 durchsetzt dann die untere Gehäusewand 24, die zur weiteren Vergleichmäßigung des Luftstroms 92 und zum Schutz gegen eine Berührung des Heizelements 72 mit einem Gitter 94 versehen ist.

Sämtliche Heizstäbe 74 sind gegenüber dem Diffusor 40 als ganzes elektrisch isoliert und zusätzlich ist der Diffusor seinerseits mittels Isolierkörpern 96 und 98 zwischen den Seitenwänden 28 und 30 des äußeren Gehäuses 10 gehalten, so daß der Diffusor 40 seinerseits ebenfalls gegenüber dem Gehäuse 10 elektrisch isoliert ist.

Ferner ist der Diffusor 40 elektrisch gegenüber der Gebläseeinheit 42 isoliert. Hierzu ist zwischen einem Luftauslaß 100 eines Luftführungsgehäuses 102 der Gebläseeinheit 42 und der Lufteinlaßöffnung 54 ein Isolierzwischenstück 104 vorgesehen, welches die elektrische Isolation zwischen dem Luftführungsgehäuse 102 und dem Diffusor 40 bewirkt.

Das Luftführungsgehäuse 102 ist beispielsweise ein übliches Schneckengehäuse eines Radialgebläses, welches einen einer der Seitenwände 28 oder 30 zugewandten Lufteinlaß 106 aufweist, welchem gegenüberliegend eine Lufteinlaßöffnung 108 beispielsweise in der Seitenwand 28, die mit einem Schutzgitter überdeckt ist, angeordnet ist.

Die Gebläseeinheit 42 weist vorzugsweise ein zeichnerisch nicht dargestelltes Gebläserad auf, welches von einem Gebläsemotor 112 angetrieben ist und um eine Achse 110 rotiert, die vorzugsweise parallel zur oberen Gehäusewand 22 und parallel zur Rückwand 26 des Gehäuses 10 verläuft.

Vorzugsweise ist das Heizelement mit Hochspannung, beispielsweise 600 V, betrieben.

Zur Funktionssicherung der erfindungsgemäßen Heizeinrichtung ist einerseits die Gebläseeinheit mit einer Stromaufnahmeüberwachungseinrichtung 114 versehen, welche den Strom des Antriebsmotors 112 überwacht und bei Anstieg derselben über einen für den Antriebsmotor kritischen Grenzwert oder Abfall desselben auf null eine Stromversorgung des Heizelements 72 abschaltet.

Ferner ist am Gehäuse 10 vorzugsweise in einem mittleren Bereich vor der Luftaustrittsöffnung 66 des Diffusors 40 eine Temperaturfühleinrichtung 116 vorgesehen, welche eine Temperatur des Luftstroms 92 überwacht und bei Überschreiten eines Grenzwerts, beispielsweise einem Grenzwert von 80 °C, eine Stromversorgung des Heizelements 72 abschaltet.

Als weiteres Sicherheitselement ist eine Schmelzsicherung 118 am Diffusor 40, vorzugsweise der oberen Diffusorwand 44 desselben, gehalten, welche ebenfalls bei Überschreitung einer Lufttemperatur im Diffusor 40 von beispielsweise 120 °C eine Stromversorgung des Heizelements 72 unterbricht.

Damit ist eine optimale Absicherung der Funktion der erfindungsgemäßen Heizeinrichtung gegeben, welcher üblicherweise über eine zeichnerisch nicht dargestellten Thermostat steuerbar ist.

## Patentansprüche

1. Heizeinrichtung für Personentransportfahrzeuge, umfassend ein äußeres Gehäuse (10) und ein in diesem angeordnetes elektrisches Heizelement (72),
**dadurch gekennzeichnet**, daß das
elektrische Heizelement (72) elektrisch isoliert an einem Träger (40) gehalten ist und daß dieser Träger (40) elektrisch isoliert gegenüber dem äußeren Gehäuse (10) angeordnet ist.

2. Heizeinrichtung nach Anspruch 1, dadurch gekennzeichnet, daß der Träger (40) an dem äußeren Gehäuse (10) mittels Isolatoren (96, 98) gehalten ist.

3. Heizeinrichtung nach einem der voranstehenden Ansprüche, dadurch gekennzeichnet, daß der Träger ein Diffusor (40) für mittels einer Gebläseeinheit (42) umgewälzter Luft ist.

4. Heizeinrichtung nach Anspruch 3, dadurch gekennzeichnet, daß das Heizelement (42) innerhalb des Diffusors (40) angeordnet ist.

5. Heizeinrichtung nach Anspruch 3 oder 4, dadurch gekennzeichnet, daß die Gebläseeinheit (42) relativ zu dem Diffusor (40) elektrisch isoliert angeordnet ist.

6. Heizeinrichtung nach einem der Ansprüche 3 bis 5, dadurch gekennzeichnet, daß der Diffusor (40) sich von einem vorderen Endbereich (32) des Gehäuses (10) in Richtung einer Rückseite (26) des Gehäuses (10) erstreckt und daß zwischen der Rückseite (26) des Gehäuses (10) und dem Diffusor (40) die Gebläseeinheit (42) angeordnet ist.

7. Heizeinrichtung nach Anspruch 6, dadurch gekennzeichnet, daß der Diffusor (40) einen Gebläseluftstrom (56) in Richtung (60) des vorderen Endbereichs (32) über dem Heizelement (72) verteilt.

8. Heizelement nach Anspruch 6 oder 7, dadurch gekennzeichnet, daß das Heizelement (72) sich im wesentlichen von dem vorderen Endbereich (32) bis nahe zur Gebläseeinheit (42) erstreckt.

9. Heizeinrichtung nach einem der Ansprüche 6 bis 8, dadurch gekennzeichnet, daß der Diffusor (40) den Gebläseluftstrom (56) quer zur Erstreckung des Heizelements (72) umlenkt.

10. Heizeinrichtung nach einem der Ansprüche 6 bis 9, dadurch gekennzeichnet, daß der durch das Heizelement (72) aufgeheizte Gebläseluftstrom (56) aus einer Unterseite des Gehäuses (10) austritt.

11. Heizeinrichtung nach einem der voranstehenden Ansprüche, dadurch gekennzeichnet, daß sich das Heizelement (72) in einer Fläche (76) erstreckt, welche in einem spitzen Winkel zu einer oberen Gehäusewand (22) verläuft.

12. Heizeinrichtung nach einem der voranstehenden Ansprüche, dadurch gekennzeichnet, daß das Heizelement aus im wesentlichen parallel zueinander verlaufenden Heizstäben (74) ausgebildet ist.

13. Personentransportfahrzeug mit einer Heizeinrichtung, dadurch gekennzeichnet, daß die Heizeinrichtung unterhalb eines Sitzflächenträgers (16) eines Sitzgestells (12) eines Personensitzes des Personentransportfahrzeugs und frei über einem Fahrzeugboden angeordnet ist.

14. Personentransportfahrzeug nach Anspruch 13, dadurch gekennzeichnet, daß die Heizeinrichtung zwischen einem im wesentlichen horizontal verlaufenden Sitzflächentrageelement (16) und einem von einer Sitzvorderseite schräg in Richtung einer Sitzrückseite und in Richtung des Fahrzeugbodens verlaufenden Sitzflächenträgers (18) angeordnet ist.

15. Personentransportfahrzeug nach Anspruch 14, dadurch gekennzeichnet ,daß das Gehäuse (10) der Heizeinrichtung einen im wesentlichen in Richtung des Fahrzeugbodens gerichteten Luftauslaß (94) aufweist.

16. Personentransportfahrzeug nach einem der Ansprüche 13 bis 15, dadurch gekennzeichnet, daß die Heizeinrichtung nach einem der Ansprüche 1 bis 12 ausgebildet ist.
